# DEMANDE DE BREVET EUROPEEN

(11) **EP 2 005 830 A1**
(43) Date de publication de la demande: **24.12.2008**
(21) Numéro de dépôt: 08010406.0
(22) Date de dépôt: 07.06.2008
(51) Int. Cl.: A21D 13/00

(54) **Procédé d'obtention d'une pièce de pâtisserie et pièce de pâtisserie**

(30) Priorité: 12.06.2007 CH 9262007
(71) Demandeur: Atelier du Moelleux Sàrl, 1030 Bussigny (CH)
(72) Inventeur: Mauger, Joel, 1018 Lausanne (CH)
(74) Mandataire: Vigand, Philippe

(57) **Abrégé**

Le procédé permet d'obtenir une pièce de pâtisserie comportant une couche extérieure solide (1) sous forme d'un biscuit et un noyau central (2) sous forme d'une ganache liquide, ladite pièce étant consommée chaude bien qu'ayant été fabriquée plusieurs semaines auparavant. Un exemple de pâtisserie obtenue selon ce procédé est le moelleux au chocolat.

## Description

La présente invention concerne un procédé d'obtention d'une pièce de pâtisserie ainsi que la pièce de pâtisserie obtenue selon ce procédé.

De nombreuses pièces de pâtisserie sont connues, mais on retiendra ici plus particulièrement celles comprenant un enrobage ou une couche extérieure constituée d'un biscuit sous forme solide entourant un centre ou noyau sous forme liquide ou pâteuse, le tout étant destiné à être consommé chaud. Des pièces de pâtisserie de ce type sont notamment connues sous le nom de « moelleux au chocolat ».

Les moelleux au chocolat connus se présentent généralement sous la forme d'un seul appareil présentant simultanément deux états différents, un état solide à l'extérieur entourant un noyau à l'état liquide ou pâteux, pas totalement cuit appelé généralement mi-cuit. Ceci est possible car la pièce de pâtisserie est consommée juste sortant du four, le centre n'étant pas encore refroidi. Si une telle pièce de pâtisserie est délicieuse juste à l'état sorti du four, l'inconvénient majeur qu'elle rencontre est qu'elle ne peut être conservée en l'état plus de quelques minutes.

En effet, en se refroidissant la pièce de pâtisserie devient homogène, c'est-à-dire que son noyau se refroidit et durcit, et même si elle reste comestible elle perd son attrait principal de présenter simultanément un état solide à l'extérieur et un état liquide ou pâteux à l'intérieur. Même un réchauffement de la pièce ne peut lui rendre cet attrait.

Un but de l'invention est de proposer un procédé d'obtention d'une pièce de pâtisserie permettant d'obtenir une pièce de pâtisserie ne rencontrant pas les inconvénients des pièces de pâtisserie connues, soit pouvant être conservée une certaine durée avant d'être consommée.

La pièce de pâtisserie obtenue selon ce procédé doit donc pouvoir être consommée chaude, bien qu'elle ait été conservée durant quelques semaines après fabrication.

Un procédé d'obtention d'une telle pièce de pâtisserie est décrit dans la revendication 1 alors qu'une pièce de pâtisserie est décrite à la revendication 4; des variantes sont décrites dans les revendications dépendantes.

Le procédé ainsi qu'une pièce de pâtisserie selon l'invention sont décrits dans la description ci-dessous qui est à considérer en regard du dessin annexé comprenant les figures où :
la figure 1 représente une vue schématique d'une pièce de pâtisserie obtenue selon le procédé de l'invention,
la figure 2 représente schématiquement une pièce de pâtisserie en cours de fabrication, et,
la figure 3 représente une pièce de pâtisserie dans son emballage de protection.

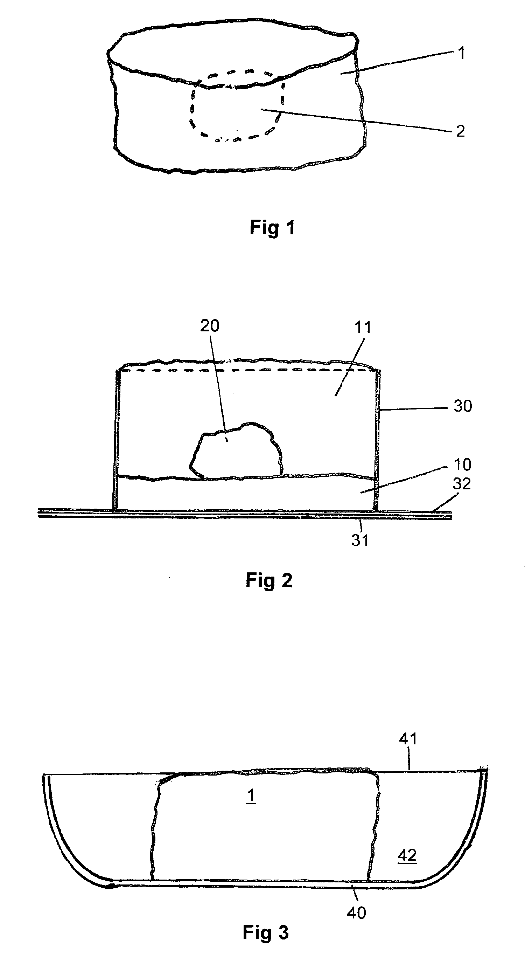

La figure 1 montre une pièce de pâtisserie, par exemple un moelleux au chocolat, comprenant un premier appareil extérieur 1 composé par exemple d'un biscuit au chocolat entourant complètement un noyau 2 composé par exemple d'une ganache au chocolat sous forme liquide ou pâteuse. Le moelleux au chocolat est destiné à être mangé à l'état chaud.

Le procédé de fabrication selon l'invention consiste à fabriquer séparément la pâte de laquelle on obtiendra l'appareil extérieur 1 respectivement le biscuit, de la ganache devant former le noyau 2.

La pâte devant former l'appareil extérieur 1, respectivement le biscuit et obtenue par toute recette connue de biscuit au chocolat, soit par exemple par un mélange de beurre, oeuf entier, sucre, farine, cacao en poudre et chocolat. La ganache devant former le noyau 2 est composée d'un mélange connu de crème, de chocolat et de beurre de cacao ; en aucun cas elle ne devra contenir de l'oeuf ou autre produit apte à coaguler sous l'effet de la température. Il n'est pas nécessaire d'ajouter un ou des produits conservateur ou colorant. Les proportions des différents ingrédients ainsi que la manière de les mélanger sont généralement propres à chaque pâtissier. On veillera à obtenir une ganache dont la masse est comprise entre 9 et 12 % de la masse de la pâte devant former l'appareil extérieur 1.

Dès que ces deux pâtes sont obtenues, on dispose un ou plusieurs moules 30 de forme cylindrique sur une plaque métallique 31, éventuellement protégée par une feuille de papier de cuisson 32; dans chacun des moules 30 on dépose une couche 10 de la pâte devant former l'appareil 1, puis, à l'aide d'une poche à douille on dépose la ganache devant former le noyau 2 sur cette couche de fond 10 et on recouvre le tout du reste de pâte 11 devant former le reste de l'appareil 1. Les pièces de pâtisserie peuvent être préparées pour former des pièces formant une seule portion ou des pièces plus importantes formant plusieurs portions. Sous cette forme on laisse de préférence reposer et maturer la pièce durant environ 12 h. afin d'obtenir un développement maximum des arômes de chocolat avant de la mettre au four pour cuisson à environ 200°C durant environ 10 minutes dans un four ventilé.

Après cuisson, refroidissement et démoulage, la pièce de pâtisserie est mis en barquette 40 et est recouverte d'une feuille de fermeture étanche 41. La barquette 40 ainsi que la feuille de fermeture 41 sont choisis dans des matériaux permettant de conserver les produits alimentaires, notamment les produits chocolatés. Afin d'assurer une bonne conservation du produit, la barquette est de préférence remplie d'un gaz 42, par exemple du gaz ALIGAL 15^{™} de l'entreprise Carbagas SA dont le siège central est à Gümlingen en Suisse, constitué d'un mélange de N₂ et de CO₂ spécialement prévu pour la conservation des produits chocolatés. Sous cette forme et protégé de cette manière, le moelleux au chocolat peut être conservé au frais durant 2 à 3 semaines ou au congélateur durant 6 semaines, sans problèmes. Chaque barquette 40 peut contenir une ou plusieurs pièces de pâtisserie ou moelleux au chocolat. C'est généralement sous cette forme que la pièce de pâtisserie ou le moelleux au chocolat est acheté par le consommateur final. Les différentes indications publicitaires,légales, ainsi que nécessaires au consommateur pour la préparation finale du produit peuvent être directement imprimées sur la barquette ou alors figurer sur un emballage extérieur cartonné entourant la barquette (non représenté sur la figure).

Avant de le consommer, il suffit alors au consommateur final de sortir le moelleux au chocolat de son emballage et de le déposer dans un four préchauffé à environ 200° où il est laissé à réchauffer durant 8 à 9 min. Il en est ensuite ressorti pour être consommé, se présentant alors comme une pâtisserie chaude, présentant une couche extérieure sous forme de biscuit, solide, alors que le centre est coulant. Il peut être consommé tel quel ou alors accompagné de glace, de sorbet, de crème ou de tout autre produit d'accompagnement adapté.

La pâtisserie a été décrite ci-dessus comme étant constituée d'un moelleux au chocolat ; le produit peut évidemment être adapté à d'autres goûts ; l'appareil extérieur 1 pouvant être un biscuit d'une autre base que le chocolat comme par exemple à base de citron ou de vanille, de même que la ganache peut être à base de purée de fruits ou aromatisée, avec ou sans alcool.

Un biscuit obtenu de cette manière peut donc être consommé, de la même manière que s'il venait d'être fabriqué, ceci longtemps après sa fabrication.

## Revendications

1. Procédé d'obtention d'une pièce de pâtisserie comprenant un premier appareil (1) extérieur sous forme d'un biscuit solide et un noyau intérieur (2) sous forme d'une ganache liquide, ladite pièce de pâtisserie étant destinée à être consommée chaude,
**caractérisé en ce que** :
la pâte servant à préparer l'appareil extérieur (1) et cette servant à préparer le noyau (2) sont préparées séparément selon des recettes connues, la pâte servant à préparer le noyau (2) ne contenant aucun produit apte à coaguler sous l'effet de la température,
la pièce de pâtisserie est ensuite préparée dans un moule (30), la pâte (10,11) servant à préparer l'appareil extérieur (1) entourant complètement celle (20) servant à préparer le noyau (2),
la pièce de pâtisserie est ensuite mise au four pour cuisson,
après cuisson, la pièce de pâtisserie est démoulée et est placée dans un emballage étanche (40, 41) pour conservation au frais,
la pièce de pâtisserie est réchauffé au four juste avant consommation.

2. Procédé d'obtention d'une pièce de pâtisserie selon la revendication 1, **caractérisé en ce que**, après avoir été préparée dans un moule (30), la pièce de pâtisserie est laissée à maturer durant environ 12 h. avant d'être mise au four pour la cuisson.

3. Procédé d'obtention d'une pièce de pâtisserie selon la revendication 1, **caractérisé en ce que** lors de la mise sous emballage étanche, la pièce de pâtisserie est protégée par un gaz de conservation.

4. Pièce de pâtisserie obtenue à partir d'un procédé selon l'une des revendications précédentes, placée dans son emballage étanche (40, 41) pour être conservée au frais.

5. Pièce de pâtisserie selon la revendication 4, **caractérisée en ce qu'**elle peut être conservée au frais jusqu'à 3 semaines.

6. Pièce de pâtisserie selon la revendication 4, **caractérisée en ce qu'**elle peut être conservée au congélateur jusqu'à 6 semaines.

7. Pièce de pâtisserie obtenue à partir d'un procédé selon l'une des revendications 1 à 3, **caractérisée en ce que** ladite pièce de pâtisserie est un moelleux au chocolat.

8. Pièce de pâtisserie obtenue à partir d'un procédé selon l'une des revendications 1 à 3, **caractérisée en ce que** l'appareil extérieur (1) est aromatisé par une base différente qu'une base de chocolat.

9. Pièce de pâtisserie obtenue à partir d'un procédé selon l'une des revendications 1 à 3, **caractérisée en ce que** le noyau (2) est à base de purée de fruits.
